(19) Europäisches Patentamt
European Patent Office
Office européen des brevets

(11) **EP 2 483 706 B1**

(12) **EUROPÄISCHE PATENTSCHRIFT**

(45) Veröffentlichungstag und Bekanntmachung des Hinweises auf die Patenterteilung:
**01.05.2013 Patentblatt 2013/18**

(21) Anmeldenummer: **10739360.5**

(22) Anmeldetag: **02.08.2010**

(51) Int Cl.:
*G01S 7/35* *(2006.01)*   *G01S 13/93* *(2006.01)*
*G01S 7/40* *(2006.01)*   *G01S 7/02* *(2006.01)*
*G01S 7/288* *(2006.01)*

(86) Internationale Anmeldenummer:
**PCT/EP2010/061181**

(87) Internationale Veröffentlichungsnummer:
**WO 2011/038955 (07.04.2011 Gazette 2011/14)**

(54) **RADARSENSOR MIT ZWEI OSZILLATOREN, ZWEI I/Q-SENDEMISCHERN UND ZWEI I/Q-EMPFANGSMISCHERN**

RADAR SENSOR COMPRISING TWO OSCILLATORS, TWO I/Q TRANSMIT MIXERS AND TWO I/Q-RECEIVE MIXERS

DÉTECTEUR RADAR À DEUX OSCILLATEURS, À DEUX MÉLANGEURS D'ÉMISSION I/Q, ET À DEUX MÉLANGEURS DE RÉCEPTION I/Q

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **30.09.2009 DE 102009045141**

(43) Veröffentlichungstag der Anmeldung:
**08.08.2012 Patentblatt 2012/32**

(73) Patentinhaber: **Robert Bosch GmbH**
**70442 Stuttgart (DE)**

(72) Erfinder:
• **HASCH, Juergen**
 **70195 Stuttgart (DE)**
• **MANICKE, Andre**
 **Dresden 01309 (DE)**

(56) Entgegenhaltungen:
**WO-A2-2005/098471   DE-A1-102004 052 518**
**US-B2- 7 012 561**

**Beschreibung**

Stand der Technik

Die Erfindung betrifft einen Radarsensor mit einem Sendeteil, das zwei Oszillatoren und einen 90°-Phasenschieber zur Erzeugung eines Sendesignals, eines ersten Vergleichssignals und eines gegenüber dem ersten Vergleichssignal um 90° phasenverschobenen zweiten Vergleichssignals aufweist, und einem Empfangsteil mit einem I-Mischer zum Mischen eines empfangenen Signals mit dem ersten Vergleichssignal und einem Q-Mischer zum Mischen des empfangenen Signals mit dem zweiten Vergleichssignal, wobei daß das Sendeteil einen ersten Sendemischer aufweist, dessen Eingänge direkt mit den beiden Oszillatoren verbunden sind.

In Kraftfahrzeugen werden zunehmend Fahrerassistenzsysteme eingesetzt, bei denen ein Radarsensor dazu dient, Objekte im Umfeld des Fahrzeugs zu orten. Je nach Funktionsprinzip und Einsatzzweck des Radarsensors kann es dabei erforderlich sein, nicht nur die Amplitude, sondern auch die Phase der empfangenen Radarsignale auszuwerten. Beispielsweise ist für eine genaue Abstandsmessung im Nahbereich mit Hilfe eines CW-Radars (Continuous Wave) eine genaue Kenntnis der Phase des empfangenen Signals erforderlich. Bei einem winkelauflösenden Radarsensor, beispielsweise einem FMCW-Radar (Frequency Modulated Continuous Wave), mit mehreren Sende- und Empfangskanälen erlaubt eine Auswertung der Phasendifferenzen zwischen den verschiedenen Kanälen eine genauere Winkelbestimmung. Mit einem Radarsensor der oben genannten Art läßt sich die Phase aus dem Verhältnis der von den beiden Mischern des Empfangsteils gelieferten I- und Q-Signale bestimmen.

Beispielsweise kann es sich bei diesem Sensor um einen Heterodyn-Sensor handeln, bei dem ein Oszillator zur Erzeugung des Sendesignals und der andere Oszillator zur Erzeugung der Vergleichssignale dient. Wenn zur Erzeugung der Vergleichssignale ein Oszillator mit fester Frequenz eingesetzt wird, so läßt sich eine einfache und genaue Erzeugung der 90°-Phasenverschiebung erreichen. Ein Nachteil bei diesem Sensortyp besteht jedoch darin, daß das Phasenrauschen der beiden Oszillatoren nicht korreliert ist, so daß relativ aufwendige, phasenrauscharme Oszillatoren benötigt werden.

Im Unterschied dazu werden bei einem homodynen Sensorkonzept das Sendesignal und die beiden Vergleichssignale von ein und demselben Oszillator erzeugt, so daß die Sende- und Vergleichssignale ein korreliertes Phasenrauschen aufweisen, was eine Unterdrückung der durch das Phasenrauschen verursachten Effekte bei der Auswertung der empfangenen Signale erleichtert. Hier besteht jedoch der Nachteil, daß sich nicht oder nur mit großem Aufwand kontrollieren läßt, ob und in welchem Ausmaß die von dem Phasenschieber erzeugte Phasenverschiebung von dem Idealwert von 90° abweicht. Solche Abweichungen führen zu Phasenfehlern im Empfangssignal, die nicht oder nur mit sehr großem Aufwand ermittelt und korrigiert werden können.

Aus WO 2005/098471 A2 ist ein Radarsensor nach dem Oberbegriff des Anspruchs 1 bekannt.

US 7 012 561 B2 beschreibt einen Radarsensor nach dem Heterodyn-Prinzip, mit einem zweiten Oszillator, der zusammen mit dem ersten Oszillator an einen einzigen Sendemischer angeschlossen ist, wobei kein Phasenschieber zwischengeschaltet ist.

Offenbarung der Erfindung

Aufgabe der Erfindung ist es, einen Radarsensor zu schaffen, der eine einfachere und genauere Bestimmung der Phase des empfangenen Signals ermöglicht.

Diese Aufgabe wird erfindungsgemäß dadurch gelöst, daß das Sendeteil, einen zweiten Sendemischer aufweist, dessen einer Eingang direkt mit einem ersten der beiden Oszillatoren verbunden ist und dessen anderer Eingang über den Phasenschieber mit dem anderen Oszillator verbunden ist.

Vorteile der Erfindung

Mit den beiden Sendemischern lassen sich niederfrequente 1- und Q-Referenzsignale erzeugen, die zur Überwachung und Regelung des Phasenschiebers und/oder zur Reduzierung des Phasenrauschens einer oder beider Oszillatoren genutzt werden können. Darüber hinaus erlauben diese Referenzsignale bei einem Sensor mit frequenzmoduliertem Sendesignal eine einfache und genaue Regelung der Frequenzmodulation ohne Verfälschung der Regelschleife durch zusätzliche Frequenzteilerketten.

Insbesondere wird so eine genaue Messung im Nahbereich ermöglicht. Der Radarsensor eignet sich deshalb z. b. auch zur Messung des Tankfüllstands in einem Kraftfahrzeug oder auch für Anwendungen außerhalb von Kraftfahrzeugen, etwa für Entfernungsmessungen in der Industrietechnik.

Vorteilhafte Ausgestaltungen und Weiterbildungen der Erfindung sind in den Unteransprüchen angegeben.

Bei einem Homodyn-Radar können das Sendesignal und das erste Vergleichssignal durch die Summenfrequenzkomponente des Mischprodukts des ersten Sendemischers gebildet werden (also den Frequenzanteil des Mischprodukts, dessen Frequenz gleich der Summe der Frequenzen der beiden Oszillatoren ist), und das zweite Vergleichssignal kann durch die Summenfrequenzkomponente des Mischprodukts des zweiten Sendemischers gebildet werden. Die Differenzfrequenzkomponenten der beiden Sendemischer bilden dann die I- und Q-Referenzsignale. Die Funktion des Phasenschiebers läßt sich dann mit Hilfe eines Phasenvergleichs dieser Referenzsignale überwachen und ggf. regeln.

Alternativ oder zusätzlich ist es möglich, für den Oszillator, dessen Signal dem Phasenschieber zugeführt wird, einen Oszillator mit variabler Frequenz einzusetzen, dessen Frequenz an eine feste Referenzfrequenz angebunden wird. Da somit die Frequenz dieses Oszillators genau bekannt ist und zudem die Differenzfrequenz der beiden Oszillatoren durch die Frequenzen oder I- und Q-Referenzsignale gegeben ist, läßt sich auch die Frequenz (Summenfrequenz) des durch den ersten Sendemischer erzeugten Sendesignals genau bestimmen.

Weiterhin kann die Frequenz des I- oder Q-Referenzsignals in einer Phasenregelschleife, die den zugehörigen Oszillator ansteuert, auf eine Modulationsfrequenz geregelt werden, die dann die Frequenzmodulation des Sendesignals bestimmt.

Im Fall eines Hetorodyn-Radars kann der erste Oszillator zur Erzeugung des Sendesignals dienen, während der zweite Oszillator die beiden Vergleichssignale erzeugt. Die beiden Sendemischer erzeugen dann I- und Q-Referenzsignale, deren Frequenz um so niedriger ist, je geringer der Frequenzunterschied zwischen den beiden Oszillatoren ist und die vorzugsweise in einem Zwischenfrequenzband liegen. In demselben Zwischenfrequenzband liegen dann auch die I- und Q-Signale, die als Mischprodukte der 1- und Q-Mischer erhalten werden, und das Phasenrauschen dieser Signale ist mit dem Phasenrauschen der Referenzsignale korreliert. Durch Mischen oder I- und Q-Referenzsignale mit den Zwischenfrequenzsignalen I und Q erhält man dann entsprechende Signale im Basisband, aus denen sich die Phase des empfangenen Signals mit hoher Genauigkeit bestimmen läßt.

In DE 10 2004 052 518 A1 und WO 2008/006656 A1 werden winkelauflösende (Homodyn-) Radarsensoren beschrieben, deren mehrere Sende- und Empfangskanäle jeweils einen bestimmten Frequenzversatz aufweisen. Dadurch werden Störeffekte unterdrückt, die durch Interferenz zwischen den verschiedenen Kanälen entstehen, und außerdem wird die Auswertung sogenannter Kreuzechos ermöglicht, d.h., die Auswertung von Radarsignalen, die in einem Kanal gesendet und nach Reflexion am Objekt in einem anderen Kanal empfangen wurden.

Der hier vorgeschlagene Radarsensor, insbesondere in der homodynen Konfiguration, erlaubt eine einfache Einstellung der Frequenzversätze zwischen den verschiedenen Kanälen und eine einfache und einheitliche Steuerung der Frequenzmodulation in diesen Kanälen.

Kurze Beschreibung der Zeichnungen

Ausführungsbeispiele der Erfindung sind in den Zeichnungen dargestellt und in der nachfolgenden Beschreibung näher erläutert.

Es zeigen:

Figur 1     ein Blockdiagramm eines erfindungsgemäßen Radarsensors gemäß einem ersten Ausführungsbeispiel;

Figur 2     ein Blockdiagramm einer Weiterbildung des Radarsensors nach Fig. 1;

Figur 3     ein Blockdiagramm für eine weitere Variante des Radarsensors nach Fig. 1;

Figur 4     ein Blockdiagramm eines Radarsensors gemäß einem zweiten Ausführungsbeispiel; und

Figur 5     ein Blockdiagramm eines Radarsensors mit zwei Sende- und Empfangskanälen.

Ausführungsformen der Erfindung

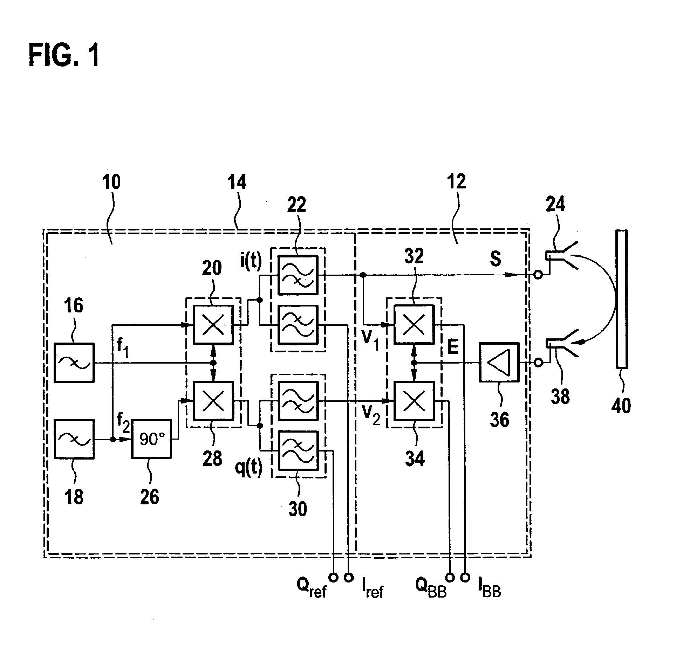

Der in Fig. 1 gezeigte Radarsensor weist ein Sendeteil 10 und ein Empfangsteil 12 auf, die auf einer gemeinsamen Platine 14 installiert sein können. Das Sendeteil 10 weist einen ersten Oszillator 16 und einen zweiten Oszillator 19 auf, deren Oszillationsfrequenz jeweils etwa der Hälfte der gewünschten Sendefrequenz entspricht. Beispielsweise hat bei einer Sendefrequenz von 122 GHz der erste Oszillator 16 eine Frequenz $f_1$ von 62 GHz und der zweite Oszillator 18 eine Frequenz $f_2$ von 60 GHz. In einem ersten Sendemischer 20 werden die Signale der beiden Oszillatoren 16, 18 miteinander gemischt. Man erhält so am Ausgang des ersten Sendemischers 20 ein Signal i(t) von der Form

$$i(t) = \cos[2\pi(f_1\text{-}f_2)t]+\cos[2\pi(f_1+f_2)t].$$

In einem Duplexfilter 22 werden die Frequenzanteile mit der Summenfrequenz $(f_1 + f_2)$ und der Differenzfrequenz $(f_1 - f_2)$ voneinander getrennt. Am Ausgang eines Hochpaß-Pfades des Duplexfilters 22 erhält man so ein Sendesignal S (mit der Summenfrequenz $(f_1 + f_2)$, das über eine Antenne 24 abgestrahlt wird.

Das Sendeteil 10 enthält weiterhin einen Phasenschieber 26, mit dem die Phase des von dem zweiten Oszillator 18 erzeugten Signals um 90° verschoben wird. In einem zweiten Sendemischer 28 wird dieses phasenverschobene Signal mit dem Signal des ersten Oszillators 16 gemischt, und man erhält am Ausgang ein Signal q(t) von der Form

$$q(t) = \sin[2\pi(f_1\text{-}f_2)t]+\sin[2\pi(f_1+f_2)t].$$

In einem weiteren Duplexfilter 30 wird auch das Signal q(t) in eine Frequenzkomponente mit der Sum-

menfrequenz ($f_1 + f_2$) und eine Frequenzkomponente mit der Differenzfrequenz ($f_1 - f_2$) aufgespalten.

Das Empfangsteil 12 enthält einen I-Mischer 32, einen Q-Mischer 34 und einen Empfangsverstärker 36, dessen Eingang mit einer Antenne 38 verbunden ist. Die Antenne 38 kann wahlweise mit der Antenne 24 identisch sein (monostatisches Antennenkonzept), wenn das empfangene Signal beispielsweise mit Hilfe eines Zirkulators vom Sendesignal getrennt wird.

Die von der Antenne 24 emittierte Radarstrahlung wird an einem Objekt 40 reflektiert, und das so erzeugte Radarecho wird von der Antenne 38 empfangen und nach Verstärkung im Verstärker 36 als empfangenes Signal E den I- und Q-Mischern 32 und 34 zugeführt. Das empfangene Signal E weist gegenüber dem Sendesignal S eine Frequenzverschiebung auf, die von der Relativgeschwindigkeit des Objekts 40 (Dopplereffekt) und, sofern das Sendesignal frequenzmoduliert ist, auch von der Signallaufzeit und damit dem Abstand des Objekts 40 abhängig ist.

Im I-Mischer 32 wird das empfangene Signal E mit einem ersten Vergleichssignal $V_1$ gemischt, das (beispielsweise mit Hilfe eines nicht näher gezeigten Kopplers) vom Hochpaß-Ausgang des Duplexmischers 22 abgegriffen wird, also mit dem Sendesignal S identisch ist (homodynes Mischungskonzept). Am Ausgang des I-Mischers 32 erhält man so ein I-Signal $I_{BB}$, dessen Frequenz in einem sogenannten Basisband liegt und gleich dem Frequenzunterschied zwischen dem empfangenen Signal E und dem Vergleichssignal $V_1$ ist. Die Frequenz dieses I-Signals gibt somit die Frequenzverschiebung des Radarechos an. Im Q-Mischer 34 wird das empfangene Signal E mit einem zweiten Vergleichssignal $V_2$ gemischt, das vom Hochpaß-Ausgang des Duplexmischers 32 zugeführt wird. Dieses Vergleichssignal $V_2$ hat somit die Summenfrequenz $f_1 + f_2$, ist jedoch aufgrund der Wirkung des Phasenschiebers 26 gegenüber dem ersten Vergleichssignal $V_1$ um 90° phasenverschoben. Am Ausgang des Q-Mischers erhält man so ein Q-Signal $Q_{BB}$, das ebenfalls im Basisband liegt und die gleiche Frequenz hat wie das I-Signal $I_{BB}$. In einer nachgeschalteten

Auswertungsstufe läßt sich nun aus den I- und Q-Signalen die Phase φ des Radarechos bestimmen:

$$\varphi = \arctan(I_{BB}/Q_{BB}).$$

Die Oszillatoren 16, 18 weisen unvermeidlich ein gewisses Phasenrauschen auf. Da jedoch die Vergleichssignale $V_1$ und $V_2$ in gleicher Weise als Mischprodukte aus dem Signal beider Oszillatoren gebildet werden, ist das Phasenrauschen des zweiten Vergleichssignals $V_2$ mit dem Phasenrauschen des ersten Vergleichssignals $V_1$ korreliert, so daß dieses Phasenrauschen bei der weiteren Auswertung der I- und Q-Signale $I_{BB}$, $Q_{BB}$ keine nennenswerte Störquelle darstellt.

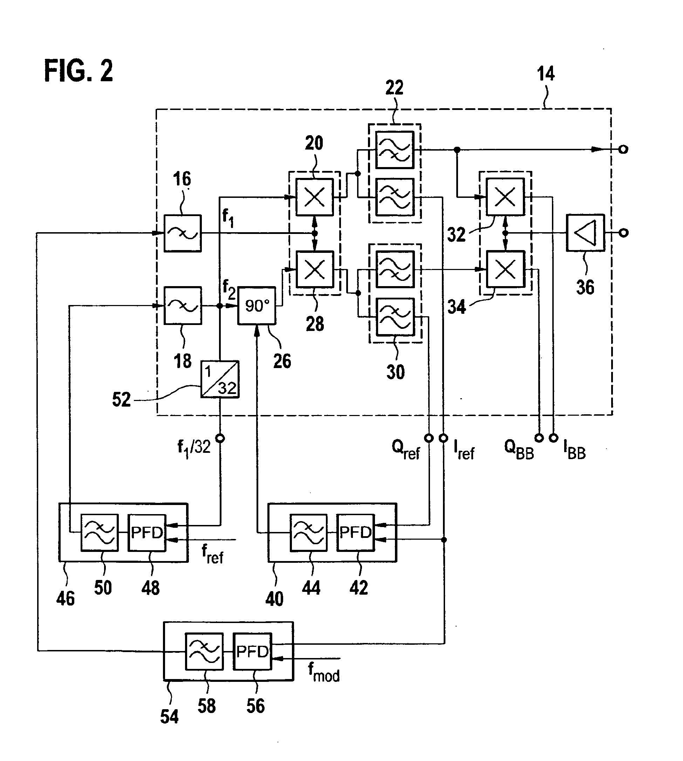

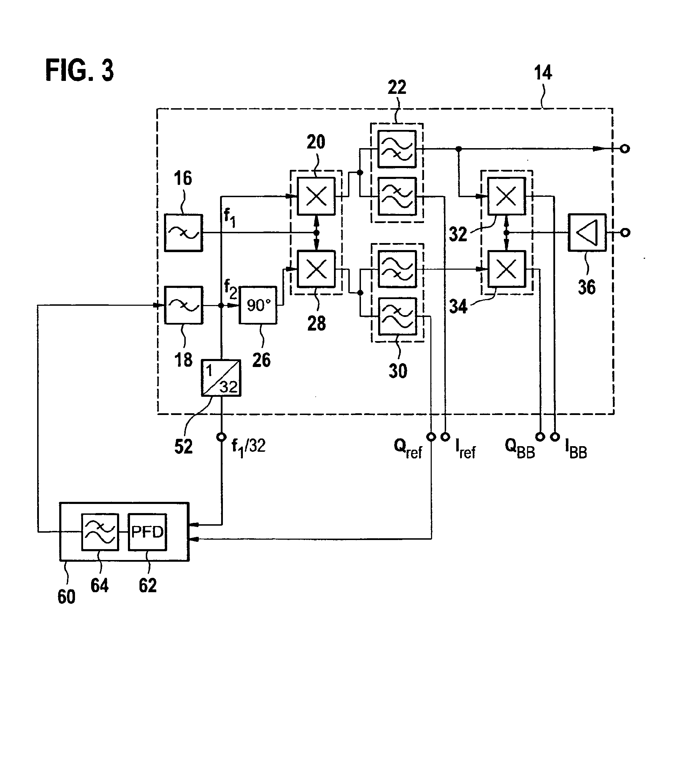

Ein gewisser Phasenfehler kann allerdings dadurch entstehen, daß die vom Phasenschieber 26 erzeugte Phasenverschiebung nicht exakt 90° beträgt. Der hier vorgeschlagene Radarsensor bietet jedoch die Möglichkeit, diesen Phasenfehler zu bestimmen und ggf. zu korrigieren. Dazu wird am Ausgang des Tiefpaßteils des Duplexmischers 22 ein I-Referenzsignal $I_{ref}$ gebildet, dessen Frequenz gleich der Differenzfrequenz $f_1 - f_2$ ist. Entsprechend wird am Ausgang des Tiefpaßteils des Duplexfilters 30 ein Q-Referenzsignal $Q_{ref}$ gebildet, das ebenfalls die Differenzfrequenz $f_1 - f_2$ hat. Der Phasenunterschied zwischen den I- und Q-Referenzsignalen bildet den vom Phasenschieber 26 erzeugten Phasenfehler ab. Folglich können diese Referenzsignale zur Bestimmung und Korrektur des Phasenfehlers und/oder zur weiteren Unterdrückung des Phasenrauschens benutzt werden. Verschiedene Möglichkeiten hierzu werden nachfolgend anhand der Fig. 2 und 3 illustriert.

In Fig. 2 ist zunächst eine Phasenregelschleife 40 gezeigt, die einen Phasenvergleicher 42 und einen nachgeschalteten Tiefpaßfilter 44 aufweist. Der Phasenvergleicher 42 vergleicht die Phasen der I- und Q-Referenzsignale $I_{ref}$, $Q_{ref}$. Das Vergleichsergebnis wird nach Tiefpaßfilterung im Tiefpaßfilter 44 dem Phasenschieber 26 als Regelsignal zugeführt. Auf diese Weise läßt sich der Phasenschieber 26 kontinuierlich so regeln, daß Abweichungen der Phasenverschiebung von dem Idealwert von 90° unterdrückt werden. Wesentlich ist dabei, daß die I- und Q-Referenzsignale eine vergleichsweise niedrige Frequenz haben (2 GHz in diesem Beispiel), so daß sich ihre Phasen hinreichend genau bestimmen und vergleichen lassen.

Weiterhin ist in Fig. 2 eine Frequenzregelschleife 46 gezeigt, die ebenfalls durch einen Phasenvergleicher 48 und einen nachgeschalteten Tiefpaßfilter 50 gebildet wird. Einem Eingang des Phasenvergleichers 48 wird eine Referenzfrequenz $f_{ref}$ zugeführt, die von einem frequenzstabilen Referenzoszillator erzeugt wird und 1/32 der gewünschten Frequenz $f_2$ des zweiten Oszillators 18 beträgt. Dem anderen Eingang des Phasenvergleichers 48 wird ein Signal zugeführt, das aus dem Ausgangssignal des zweiten Oszillators 18 gebildet wird, indem dessen Frequenz $f_2$ mit Hilfe eines Frequenzteilers 52 im Verhältnis 1/32 geteilt wird. Der zweite Oszillator 18 ist in diesem Fall ein frequenzregelbarer Oszillator, dem das Vergleichsergebnis nach Tiefpaßfilterung im Tiefpaßfilter 50 als Regelsignal zugeführt wird. Auf diese Weise wird die Frequenz $f_2$ des zweiten Oszillators 18 kontinuierlich so geregelt, daß sie exakt das 32-fache der Referenzfrequenz $f_{ref}$ beträgt.

Ein wesentlicher Vorteil besteht hier darin, daß die Frequenz $f_2$ des zweiten Oszillators 18 nur etwa die Hälfte der Sendefrequenz $f_1 + f_2$ beträgt, so daß eine Frequenzteilung im Verhältnis 1/32 genügt, um eine hinreichend niedrige Frequenz für einen genauen Phasenvergleich im Phasenvergleicher 48 zu erhalten. Bei bekannter Frequenz $f_1$ des ersten Oszillators 16 läßt sich so auch die Sendefrequenz $f_1 + f_2$ mit hoher Genauigkeit

bestimmen. Gegebenenfalls kann die Differenzfrequenz $f_1 - f_2$ anhand des I- oder Q-Referenzsignals überwacht werden, um $f_1$ anhand der Differenzfrequenz $f_1 - f_2$ und der stabilisierten Frequenz $f_2$ zu bestimmen.

Wenn auch der erste Oszillator 16 regelbar ist, kann mit einer (Modulations-) Frequenzregelschleife 54 in sehr einfacher Weise die Frequenz des Sendesignals moduliert werden. Dazu wird ein niederfrequentes Signal, dessen Frequenz $f_{mod}$ in der gewünschten Weise moduliert ist (beispielsweise, bei einem FMCW-Radar, mit einer Frequenzmodulation gemäß einer linearen Rampe), an einen Eingang eines Phasenvergleichers 56 angelegt, der die Phase dieses Signals mit der Phase des am anderen Eingang anliegenden I-Referenzsignals $I_{ref}$ vergleicht. Das Vergleichsergebnis wird über einen Tiefpaßfilter 58 dem Oszillator 16 als Regelsignal zugeführt. Auf diese Weise wird die Frequenz $f_1$ des ersten Oszillators 16 so geregelt, daß die Frequenz $f_1 - f_2$ des I-Referenzsignals mit $f_{mod}$ in Übereinstimmung gehalten wird. Aus $f_1 - f_2 = f_{mod}$ folgt dann:

$$f_1 = f_2 + f_{mod}$$

und für die Frequenz des Sendesignals E:

$$f_1 + f_2 = 2 f_2 + f_{mod}.$$

Fig. 3 illustriert eine Variante, bei der das Q-Referenzsignal $Q_{ref}$ dazu benutzt wird, das Phasenrauschen des Oszillatorsystems zu reduzieren. Das Q-Referenzsignal $Q_{ref}$ entsteht durch Mischung des Signals des ersten Oszillators 16 mit dem um 90° phasenverschobenen Signal des Phasenschiebers 26 im zweiten Sendemischer 28 und hat die Frequenz $f_1 - f_2$. Seine Phase reflektiert deshalb das Phasenrauschen beider Oszillatoren sowie auch etwaige Phasenfehler des Phasenschiebers 26. In dem hier betrachteten Beispiel sind $f_1$ und $f_2$ so gewählt, daß ihre Differenz $f_1 - f_2$ gerade 1/32 von $f_2$ beträgt. In einer Phasenregelschleife 60 wird die Phase des Q-Referenzsignals mit dem im Verhältnis 1/32 frequenzgeteilten Signal des zweiten Oszillators 18 verglichen, und das Vergleichsergebnis wird über einen Tiefpaß 64 dem zweiten Oszillator 18 als Regelsignal zugeführt. Auf diese Weise wird das Phasenrauschen deutlich unterdrückt.

Wenn die Frequenz eines Oszillators halbiert wird, so ergibt sich generell am Ausgang des Frequenzteilers eine Reduzierung des Phasenrauschens um 6 dB. Da im Frequenzteiler 52 die Frequenz im Verhältnis 1/32 ($1/2^5$) geteilt wird, ergibt sich rechnerisch eine Reduzierung des Phasenrauschens um etwa 30 dB.

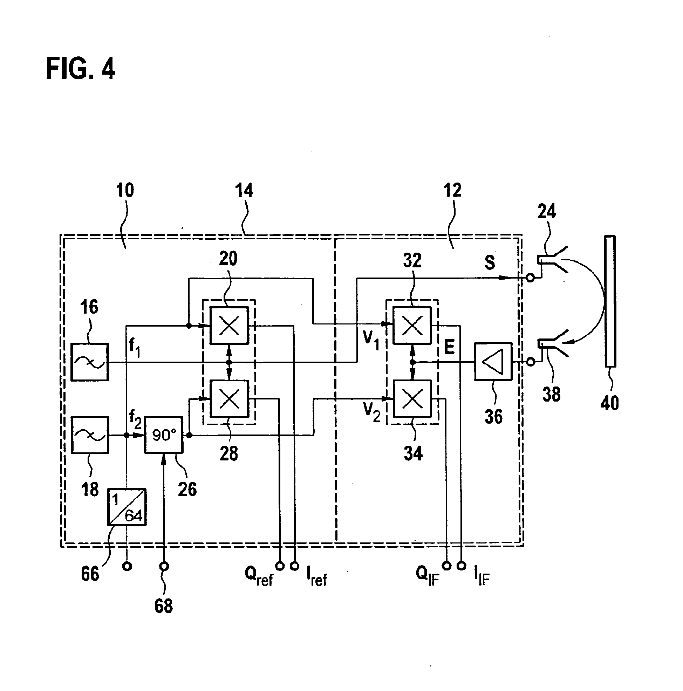

Fig. 4 zeigt als weiteres Ausführungsbeispiel einen Radarsensor, der als Hetorodyn-Sensor konfiguriert ist. Das Signal des ersten Oszillators 16 bildet unmittelbar das Sendesignal S, während das erste Vergleichssignal $V_1$ durch das Signal des zweiten Oszillators 18 und das zweite Vergleichssignal $V_2$ durch das im Phasenschieber 26 um 90° phasenverschobene Signal des zweiten Oszillators 18 gebildet wird. Als Beispiel kann angenommen werden, daß der erste Oszillator 16 eine Frequenz von 122 GHz hat (Sendefrequenz), während der zweite Oszillator 18 eine Frequenz $f_2$ von 120 GHz hat. Die I- und Q-Mischer 32, 34 liefern in diesem Fall I- und Q-Signale $I_{IF}$, $Q_{IF}$, die in einem Zwischenfrequenzband liegen und eine Frequenz in der Größenordnung von etwa 2 GHz haben.

Die Sendemischer 20 und 28 mischen das Sendesignal S mit den Vergleichssignalen $V_1$ und $V_2$ (der Ausdruck "Sendemischer" dient lediglich zur Unterscheidung zwischen Mischern des Sendeteils 10 und des Empfangsteils 12 und bedeutet nicht zwingend, daß diese Mischer auch an der Erzeugung des Sendesignals oder der Vergleichssignale beteiligt sind). Die als Mischprodukte erhaltenen I- und Q-Referenzsignale $I_{ref}$ und $Q_{ref}$ liegen im Zwischenfrequenzband und haben die Frequenz $f_1 - f_2 = 2\ GH_z$.

Die I- und Q-Referenzsignale können in ähnlicher Weise benutzt werden wie bei dem zuvor beschriebenen Ausführungsbeispiel. Beispielsweise ermöglicht ein Frequenzteiler 66, der die Frequenz $f_2$ des zweiten Oszillators 18 im Verhältnis 1/64 teilt, eine Unterdrückung des Phasenrauschens ähnlich wie bei der Phasenregelschleife 60 in Fig. 3. Ebenso ist ein Regeleingang 68 für den Phasenschieber 26 vorgesehen, so daß sich auch die Phasenverschiebung in ähnlicher Weise regeln läßt wie mit der Phasenregelschleife 40 in Fig. 2.

Da das Sendesignal S und die Vergleichssignale $V_1$ und $V_2$ hier von verschiedenen Oszillatoren erzeugt werden, ist das Phasenrauschen der Vergleichssignale nicht mit dem Phasenrauschen des Sendesignals korreliert, was zu entsprechenden Rauscheffekten in den I- und Q-Signalen $I_{IF}$ und $Q_{IF}$ führt. Die I- und Q-Referenzsignale enthalten jedoch dieselben Rauscheffekte, da sie durch Mischung des Sendesignals mit denselben Vergleichssignalen entstehen. Folglich ist das Phasenrauschen oder I- und Q-Signale $I_{IF}$ und $Q_{IF}$ mit dem Phasenrauschen oder I- und Q-Referenzsignale $I_{ref}$ und $Q_{ref}$ korreliert, und wenn man diese Signale miteinander mischt, um entsprechende I- und Q-Signale im Basisband zu erhalten, so werden die durch das Phasenrauschen bedingten Fehler weitgehend eliminiert, und die Phase des Radarechos läßt sich mit hoher Genauigkeit bestimmen. Wahlweise können die I- und Q-Signale $I_{IF}$ und $Q_{IF}$ auch direkt mit den zugehörigen Referenzsignalen $I_{ref}$ und $Q_{ref}$ verglichen werden, um die Phasendifferenz zu bestimmen.

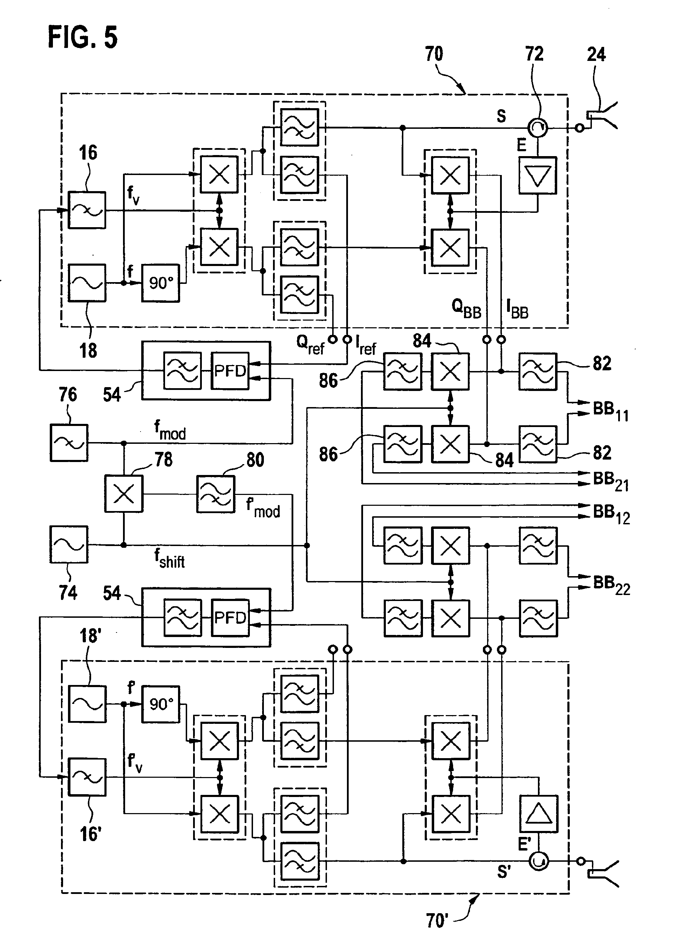

Fig. 5 illustriert die Anwendung von Sende- und Empfangsteilen mit dem in Fig. 2 gezeigten Aufbau in einem Radarsensor mit mehreren Sende- und Empfangskanälen. Der Einfachheit halber sind in Fig. 5 nur zwei Kanäle 70, 70' gezeigt, deren Sende- und Empfangsteile sich jeweils auf einer Platine, doch läßt sich das hier dargestellte Prinzip problemlos auf Radarsensoren mit mehr als zwei Kanälen erweitern. Der Aufbau der Sende- und Empfangsteile in Fig. 5 unterscheidet sich von dem Aufbau in Fig. 2 lediglich dadurch, daß in Fig, 5 ein monostatisches Antennenkonzept verwirklicht ist und demgemäß ein Zirkulator 72 dazu vorgesehen ist, das empfangene Signal E vom Sendesignal S zu trennen.

Die Sendesignale S und S' in den beiden Kanälen 70, 70' haben Frequenzen, die um eine feste Frequenz $f_{shift}$ gegeneinander verschoben sind. Die Frequenz $f_{shift}$ wird mit einem Festfrequenzoszillator 74 erzeugt. Außerdem werden beide Sendesignale S und S' synchron frequenzmoduliert. Dazu erzeugt ein variabler Oszillator 76 die Modulationsfrequenz $f_{mod}$.

Im Kanal 70 wird die Modulationsfrequenz $f_{mod}$ direkt der Frequenzregelschleife 54 zugeführt, um die vom variablen Oszillator 16 erzeugte Frequenz (hier mit $f_v$ bezeichnet) mit der Modulationsfrequenz $f_{mod}$ zu verriegeln. Der erste Oszillator 16 erzeugt eine feste Frequenz f. Die Summenfrequenz $f + f_v$ des Sendesignals S wird somit in der durch $f_{mod}$ vorgegebenen Weise moduliert.

Der Frequenzregelschleife 54 im zweiten Kanal 70' wird dagegen nicht direkt die Frequenz $f_{mod}$ zugeführt, sondern vielmehr die Frequenz $f_{mod} + f_{shift}$, die man dadurch erhält, daß die Signale der Oszillatoren 74 und 76 in einem Mischer 78 gemischt und dann in einem Hochpaßfilter 80 gefiltert werden.

Der Einfachheit halber soll zunächst angenommen werden, daß die Frequenz f, die der zweite Oszillator 18 im zweiten Kanal 70' erzeugt, mit der Frequenz f des zweiten Oszillators im ersten Kanal 70 identisch ist. Die Frequenzen der Sendesignale S und S' unterscheiden sich dann nur um die Frequenz $f_{shift}$ und weisen außerdem eine identische Frequenzmodulation auf.

Im ersten Kanal 70 geben die I- und Q-Signale $I_{BB}$ und $Q_{BB}$, nach Tiefpaßfilterung in einem Filter 82, unmittelbar die durch den Abstand und die Relativgeschwindigkeit des Objekts verursachte Frequenzverschiebung des Radarechos an. Diese Signale, die in einem Basisband $BB_{11}$ liegen, werden digitalisiert, als Zeitsignal aufgezeichnet und dann durch schnelle Fourier-Transformation in ein Spektrum zerlegt, das dann in bekannter Weise weiter ausgewertet wird.

Zwar werden im ersten Kanal 70 auch Signale empfangen, die im zweiten Kanal 70' mit der um $f_{shift}$ verschobenen Frequenz gesendet wurden, doch liegen diese Signale außerhalb des Basisbandes $BB_{11}$, so daß die Signalauswertung in diesem Basisband $BB_{11}$ nicht durch die aus anderen Kanälen herrührenden Signale gestört sind.

Bei dem hier gezeigten Aufbau sind jedoch Mischer 84 dazu vorgesehen, die I- und Q-Signale $I_{BB}$ und $Q_{BB}$ mit der Frequenz $f_{shift}$ zu mischen, so daß man nach Tiefpaßfilterung in Filtern 86 wiederum Signale in einem

Basisband $BB_{21}$ erhält. Diese Signale erlauben die Auswertung der Amplitude und Phase von Kreuzechos, also von Signalen, die im zweiten Kanal 70' gesendet und dann im ersten Kanal 70 empfangen wurden.

Der zweite Kanal 70' ist symmetrisch zum ersten Kanal 70 aufgebaut. Das Sendesignal und die Vergleichssignale haben hier die Frequenz $f + f_v$. So erhält man in diesem Kanal Signale in einem Basisband $BB_{22}$, das die in diesem Kanal gesendeten und empfangenen Radarechos repräsentiert, sowie Signale in einem Basisband $BB_{12}$, das die im ersten Kanal 70 gesendeten und im zweiten Kanal 70' empfangenen Kreuzechos repräsentiert.

Wenn die festen Frequenzen f und f nicht genau gleich sind, sondern sich um eine bekannte Differenzfrequenz $f_{diff}$ unterscheiden, so lassen sich die Signale in den Basisbändern $BB_{11}$ und $BB_{21}$ und entsprechend auch die Signale in den Basisbändern $BB_{22}$ und $BB_{12}$ anhand der Differenzfrequenz $f_{diff}$ miteinander korrelieren, und man kann so die Phasendifferenzen zwischen den direkten Radarechos und en Kreuzechos bestimmen und auswerten, die durch die unterschiedlich langen Signalwege von der Antenne 24 des einen Kanals zum Objekt und zurück zu der Antenne desselben Kanals und von der Antenne des einen Kanals zum Objekt und zurück zur Antenne des anderen Kanals entstehen.

**Patentansprüche**

1. Radarsensor mit einem Sendeteil (10), das zwei Oszillatoren (16, 18) und einen 90°-Phasenschieber (26) zur Erzeugung eines Sendesignals (S), eines ersten Vergleichssignals ($V_1$) und eines gegenüber dem ersten Vergleichssignal um 90° phasenverschobenen zweiten Vergleichssignals ($V_2$) aufweist, und einem Empfangsteil (12) mit einem I-Mischer (32) zum Mischen eines empfangenen Signals (E) mit dem ersten Vergleichssignal ($V_1$) und einem Q-Mischer (34) zum Mischen des empfangenen Signals mit dem zweiten Vergleichssignal (V2), wobei das Sendeteil (10) einen ersten Sendemischer (20) aufweist, dessen Eingänge direkt mit den beiden Oszillatoren (16, 18) verbunden sind, **dadurch gekennzeichnet, daß** das Sendeteil (10) einen zweiten Sendemischer (28) aufweist, dessen einer Eingang direkt mit einem ersten (16) der beiden Oszillatoren verbunden ist und dessen anderer Eingang über den Phasenschieber (26) mit dem anderen Oszillator (18) verbunden ist.

2. Radarsensor nach Anspruch 1, bei dem die I- und Q-Mischer (32, 34) als Homodyn-Mischer beschaltet sind.

3. Radarsensor nach Anspruch 2, bei dem jedem der Sendemischer (20, 28) Filter (32, 30) nachgeschaltet sind, zur Aufteilung des jeweiligen Mischprodukts in einen Summenfrequenzanteil und einen Differenzfrequenzanteil, wobei der Summenfrequenzanteil des ersten Sendemischers (20) das Sendesignal (S) und das erste Vergleichssignal ($V_1$) bildet und der Summenfrequenzanteil des zweiten Sendemischers (28) das zweite Vergleichssignal ($V_2$) bildet, während die Differenzfrequenzanteile der beiden Sendemischer 1- und Q-Referenzsignale ($I_{ref}$, $Q_{ref}$) bilden.

4. Radarsensor nach Anspruch 3, mit einer Frequenzregelschleife (54) zur Regelung der Frequenz ($f_1$) des ersten Oszillators (16) anhand eines Vergleichs der Phase des I-Referenzsignals ($I_{ref}$) und/oder des Q-Referenzsignals ($Q_{ref}$) mit der Phase eines Signals mit einer modulierten Frequenz ($f_{mod}$).

5. Radarsensor mit mehreren Sende- und Empfangskanälen (70, 70'), die jeweils gemäß Anspruch 4 ausgebildet sind und bei denen die Frequenzen der Sendesignale (S, S') um eine feste Frequenz ($f_{shift}$) gegeneinander verschoben sind.

6. Radarsensor nach Anspruch 1, bei dem die I- und Q-Mischer (32, 34) als Heterodyn-Mischer beschaltet sind und die ersten und zweiten Sendemischer (20, 28) jeweils den Differenzfrequenzanteil des Mischprodukts als I-Referenzsignal ($I_{ref}$) und Q-Referenzsignal ($Q_{ref}$) ausgeben.

7. Radarsensor nach einem der Ansprüche 4 bis 6, mit einer Phasenregelschleife (40) zur Regelung der Phasenverschiebung im 90°-Phasenschieber anhand eines Vergleichs der Phasen der I- und Q-Referenzsignale ($I_{ref}$, $Q_{ref}$).

8. Radarsensor nach einem der Ansprüche 4 bis 7, mit einer Frequenzregelschleife (46) zur Regelung der Frequenz des zweiten Oszillators (18) anhand eines Vergleichs der Phase eines Referenzfrequenzsignals ($f_{ref}$) mit der Phase des Signals eines Frequenzteilers (52; 66), der die Frequenz ($f_2$) des zweiten Oszillators (18) in einem festen Verhältnis teilt.

9. Radarsensor nach einem der Ansprüche 4 bis 8, mit einer Phasenregelschleife (60) zur Regelung der Phase des zweiten Oszillators (18) anhand eines Vergleichs der Phase des I-Referenzsignals ($I_{ref}$) und/oder des Q-Referenzsignals ($Q_{ref}$) mit der Phase des Signals eines Frequenzteilers (52, 66), der die Frequenz ($f_2$) des zweiten Oszillators (18) in einem festen Verhältnis teilt.

10. Radarsensor nach einem der vorstehenden Ansprüche, bei dem die Frequenzen ($f_1$, $f_2$) des ersten Oszillators (16) und des zweiten Oszillators (18) jeweils größer als 40 GHz sind und sich um einen Betrag unterscheiden, der kleiner ist als 10 GHz, vorzugsweise kleiner als 3 GHz.

**Claims**

1. Radar sensor having a transmission part (10), which has two oscillators (16, 18) and a 90° phase shifter (26) for generating a transmission signal (S), a first comparison signal ($V_1$) and a second comparison signal ($V_2$) which is phase-shifted through 90° with respect to the first comparison signal, and a reception part (12) having an I mixer (32) for mixing a received signal (E) with the first comparison signal ($V_1$) and a Q mixer (34) for mixing the received signal with the second comparison signal ($V_2$), the transmission part (10) having a first transmission mixer (20), the inputs of which are directly connected to the two oscillators (16, 18), **characterized in that** the transmission part (10) has a second transmission mixer (28), one input of which is directly connected to a first oscillator (16) of the two oscillators and the other input of which is connected to the other oscillator (18) via the phase shifter (26).

2. Radar sensor according to Claim 1, in which the I and Q mixers (32, 34) are connected as homodyne mixers.

3. Radar sensor according to Claim 2, in which filters (32, 30) are connected downstream of each of the transmission mixers (20, 28) for dividing the respective mixing product into a sum frequency component and a difference frequency component, the sum frequency component of the first transmission mixer (20) forming the transmission signal (S) and the first comparison signal ($V_1$) and the sum frequency component of the second transmission mixer (28) forming the second comparison signal ($V_2$), while the difference frequency components of the two transmission mixers form I and Q reference signals ($I_{ref}$, $Q_{ref}$).

4. Radar sensor according to Claim 3, having a frequency locked loop (54) for controlling the frequency ($f_1$) of the first oscillator (16) on the basis of a comparison of the phase of the I reference signal ($I_{ref}$) and/or of the Q reference signal ($Q_{ref}$) with the phase of a signal at a modulated frequency ($f_{mod}$).

5. Radar sensor having a plurality of transmission and reception channels (70, 70') which are each formed according to Claim 4 and in which the frequencies of the transmission signals (S, S') are shifted with respect to one another by a fixed frequency ($f_{shift}$).

6. Radar sensor according to Claim 1, in which the I and Q mixers (32, 34) are connected as heterodyne mixers and the first and second transmission mixers (20, 28) each output the difference frequency component of the mixing product as an I reference signal ($I_{ref}$) and as a Q reference signal ($Q_{ref}$).

7. Radar sensor according to one of Claims 4 to 6, having a phase locked loop (40) for controlling the phase shift in the 90° phase shifter on the basis of a comparison of the phases of the I and Q reference signals ($I_{ref}$, $Q_{ref}$).

8. Radar sensor according to one of Claims 4 to 7, having a frequency locked loop (46) for controlling the frequency of the second oscillator (18) on the basis of a comparison of the phase of a reference frequency signal ($f_{ref}$) with the phase of the signal from a frequency divider (52; 66) which divides the frequency ($f_2$) of the second oscillator (18) in a fixed ratio.

9. Radar sensor according to one of Claims 4 to 8, having a phase locked loop (60) for controlling the phase of the second oscillator (18) on the basis of a comparison of the phase of the I reference signal ($I_{ref}$) and/or of the Q reference signal ($Q_{ref}$) with the phase of the signal from a frequency divider (52, 66) which divides the frequency ($f_2$) of the second oscillator (18) in a fixed ratio.

10. Radar sensor according to one of the preceding claims, in which the frequencies ($f_1$, $f_2$) of the first oscillator (16) and of the second oscillator (18) are each greater than 40 GHz and differ by an amount which is less than 10 GHz, preferably less than 3 GHz.

**Revendications**

1. Capteur radar comportant une partie d'émission (10) qui comprend deux oscillateurs (16, 18) et un déphaseur de 90° (26) pour générer un signal d'émission (S), un premier signal de comparaison ($V_1$) et un second signal de comparaison ($V_2$) déphasé de 90° par rapport au premier signal de comparaison, et une partie de réception (12) comportant un mélangeur I (32) destiné à mélanger un signal reçu (E) au premier signal de comparaison ($V_1$) et un mélangeur Q (34) destiné à mélanger le signal reçu au second signal de comparaison ($V_2$), dans lequel la partie d'émission (10) comprend un premier mélangeur d'émission (20) dont les entrées sont directement connectées aux deux oscillateurs (16, 18), **caractérisé en ce que** la partie d'émission (10) comprend un second mélangeur d'émission (28) dont une entrée est directement connectée à un premier (16) des deux oscillateurs et dont l'autre entrée est connectée par l'intermédiaire du déphaseur (26) à l'autre oscillateur (18).

2. Capteur radar selon la revendication 1, dans lequel les mélangeurs I et Q (32, 34) sont interconnectés en tant que mélangeur homodyne.

3. Capteur radar selon la revendication 2, dans lequel des filtres (32, 30) destinés à décomposer le produit de mélange respectif en une composante de fréquence somme et une composante de fréquence différence sont connectés en aval de chacun des mélangeurs (20, 28), dans lequel la composante de fréquence somme du premier mélangeur d'émission (20) forme le signal d'émission (S) et le premier signal de comparaison ($V_1$) et la composante de fréquence somme du second mélangeur d'émission (28) forme le second signal de comparaison ($V_2$), tandis que les composantes de fréquence différence des deux mélangeurs d'émission forment des signaux de référence I et Q ($I_{ref}$), $Q_{ref}$).

4. Capteur radar selon la revendication 3, comportant une boucle à verrouillage de fréquence (54) destinée à réguler la fréquence ($f_1$) du premier oscillateur (16) sur la base d'une comparaison des phases du signal de référence I ($I_{ref}$) et/ou du signal de référence Q ($Q_{ref}$) avec la phase d'un signal ayant une fréquence modulée ($f_{mod}$).

5. Capteur radar comportant une pluralité de canaux d'émission et de réception (70, 70') respectivement réalisés selon la revendication 4 et dans lesquels les fréquences des signaux d'émission (S, S') sont décalées l'une par rapport à l'autre d'une fréquence fixe ($f_{shift}$).

6. Capteur radar selon la revendication 1, dans lequel les mélangeurs I et Q (32, 34) sont interconnectés en tant que mélangeur hétérodyne et les premier et second mélangeurs d'émission (20, 28) délivrent respectivement la composante de fréquence différence du produit de mélange en tant que signal de référence I ($I_{ref}$) et que signal de référence Q ($Q_{ref}$).

7. Capteur radar selon l'une quelconque des revendications 4 à 6, comportant une boucle à verrouillage de phase (40) destinée à réguler le déphasage se produisant dans le déphaseur de 90° sur la base d'une comparaison des phases des signaux de référence I et Q ($I_{ref}$, $Q_{ref}$).

8. Capteur radar selon l'une quelconque des revendications 4 à 7, comportant une boucle à verrouillage de fréquence (46) destinée à réguler la fréquence du second oscillateur (18) sur la base d'une comparaison de la phase d'un signal de fréquence de référence ($f_{ref}$) avec la phase du signal d'un diviseur de fréquence (52 ; 66) qui divise la fréquence ($f_2$) du second oscillateur (18) selon un rapport fixe.

9. Capteur radar selon l'une quelconque des revendications 4 à 8, comportant une boucle à verrouillage de phase (60) destinée à réguler la phase du second oscillateur (18) sur la base d'une comparaison de la phase du signal de référence I ($I_{ref}$) et/ou du signal de référence Q ($Q_{ref}$) avec la phase du signal d'un diviseur de fréquence (52, 66) qui divise la fréquence ($f_2$) du second oscillateur (18) selon un rapport fixe.

10. Capteur radar selon l'une quelconque des revendications précédentes, dans lequel les fréquences ($f_1$, $f_2$) du premier oscillateur (16) et du second oscillateur (18) sont respectivement supérieures à 40 GHz et se différencient l'une de l'autre d'une valeur inférieure à 10 GHz, et de préférence, inférieure à 3 GHz.

# FIG. 1

# FIG. 2

**FIG. 3**

## FIG. 4

# FIG. 5

**IN DER BESCHREIBUNG AUFGEFÜHRTE DOKUMENTE**

**In der Beschreibung aufgeführte Patentdokumente**

- WO 2005098471 A2
- US 7012561 B2
- DE 102004052518 A1
- WO 2008006656 A1